# EUROPEAN PATENT SPECIFICATION

(11) **EP 2 088 128 B1**
(45) Date of publication and mention of the grant of the patent: **08.04.2015**
(21) Application number: 07122783.9
(22) Date of filing: 10.12.2007
(51) Int. Cl.: C03B 19/12, C03C 1/00

(54) **Method for the production of glassy monoliths via the sol-gel process**
Verfahren zur Herstellung von Glasmonolithen über das Sol-Gel-Verfahren
Procédé pour la production de monolithes vitreux via le procédé sol-gel

(43) Date of publication of application: 12.08.2009
(73) Proprietor: Cristal Materials Corporation, Neihu 114 Taipei City (TW)
(72) Inventor: Fregonese, Daniele, Dr., 30030 Vigonovo (VE) (IT); Rückermann, Andreas, Dr., 28047 Oleggio (Novara) (IT)
(74) Representative: Patronus IP Patent- und Rechtsanwälte

(56) References cited:
- EP-A- 1 897 860
- WO-A-01/53225
- WO-A-02/074704
- JP-A- 4 219 333
- US-A- 3 535 890
- US-A1- 2005 155 385
- DATABASE WPI Week 198637 Derwent Publications Ltd., London, GB; AN 1986-240938 XP002477646 & JP 61 168540 A (SEIKO EPSON CORP) 30 July 1986 (1986-07-30)

## Description

The present invention relates to a method for the production of glassy monoliths via the sol-gel process.

The present invention relates to an improved sol-gel process disclosed for producing silica glass objects with particularly high purity and crack-free with standard equipment by tailoring of the drying of the green body. The tailoring is done by adjusting the drying conditions for bigger objects or those shapes particularly difficult to obtain crack-free and with high purity. The new process leads also to shorter and cheaper manufacturing time because of the reduced complexity.

In very general terms the sol-gel process has been reviewed in several reviews and patents for instance in the "Journal of Non-Crystalline Solids", Vol. 37, No. 191 (1980) by Nogami et al., "Journal of Non-Crystalline Solids" Vol. 47 No. 435 (1982) by Rabinovich et al. and in Angewandte Chemie 1998, 37, 22 by Huessing and Schubert.

The big advantage, always reported, of sol-gel techniques in comparison with other techniques suitable for the manufacturing of glass, is that by this technique high melting point glass can be synthesized at relatively low temperatures. Generally, temperature inferior to 1300°C can be used. Therefore, silica glass manufacturing by sol-gel could be cheaper than the manufacturing with conventional methods just because it needs less energy.

However, when silica glass is made by sol-gel some inclusions and defects can be more often detected. These inclusions and defects could come from contaminations occurred during sintering in the oven.

Before to go more in depth in the description of the problems associated with the sol-gel techniques the inventors think it is necessary to spend some words to describe the principles.

To begin we want to describe some terms related to the sol gel process which will be frequently used throughout this patent.

The so called sol is a colloid with particles with diameters in the range of 1 to 950 nm.

The gel consists of a sponge-like, three dimensional solid network whose pores are filled with another substance (usually liquid). When gels are prepared by hydrolysis and condensation of metal or semimetal or other hydrolyzable metal compounds (through a sol stage) the pores liquid mainly consist of water and/or alcohols. The resulting "wet" gels are called aquagels or hydrogels.

When the liquid in the pores is replaced by air under hypercritical or supercritical conditions and without decisively altering the structures of the network a aerogel is obtained (or criogels when the pore liquid is removed by freeze-drying).

Xerogel is formed upon conventional drying of wet gel, by increase in temperature or decrease in pressure with concomitant large shrinkage (mostly the times destructive) of the initial uniform gel body.

The large shrinkage of the gel body upon evaporation of the pore liquid is caused by capillary forces acting on the pores walls at the liquid retreats into the gel body with consequent collapse of the network structure, as described by G. Scherer in Journal of Non-Crystalline Solids Vol. 121, 1990, 104. Therefore other drying method had to be developed, to prepare aerogels.

The patents WO 2002/04370 and US 4,432,956 describes a method according to which a gel is prepared from a solution of an alkoxisilane, to which a defined quantity of water is added for hydrolising the silane. After the gel is formed it is placed in an autoclave, an extra quantity of ethanol or acetone is added. The temperature is then risen above the critical temperature, the critical pressure is also reached. After the temperature has been risen above the critical value the pressure is slowly reduced. In this manner a dry monolithic gel could be obtained.

In the patent US 5,023,208 the pore size of the wet gel is enlarged by a hydrothermal aging treatment before the drying. In that way it is obtained a substantial reduction of mechanical stress during the drying.

Also the mould design and mould material may improve the process leading to less breakage but the mechanical strength of the aquagel will be always the most limiting factor on the manufacturing of large monoliths from sol-gel process, in this regard the inventors found relevant the Italian patent WO 2004/083138.

The quality of the raw materials used is also affecting the quality of the produced glasses and the "yield" in crack free glasses. Silica has to have a very narrow size distribution when used for the manufacturing of large crack free bodies, in order to minimize the drying stresses as reported by Donald R. Ulrich in "Sol-Gel Processing" Chemtech, pp. 242-249, 1988.

Most of the literature is reporting only experimental methods to obtain large size glass objects crack-free, by an adjustment of the drying process; conversely, very little attention has been paid on how to tailor the sol composition in order to gain better quality product.

In the patent US 5,240,488 is disclosed a sol-gel process capable of producing crack-free overcladding preform tubes. In this process, a colloidal silica dispersion is obtained having a pH from 2 to 4. To obtain adequate stability of the dispersion and prevent agglomeration, the pH is afterwards raised to a value of about 10 to 14 by use of tetramethylammonium hydroxide or other quartenary ammonium hydroxides. The reason of such treatment lies on the fact that the higher repulsion among the particles of silica, obtained by raising the pH, prevents the high agglomeration, and then the probability of local high mechanical stress, according to the DLVO theory applied at such systems as described by Brinker and Scherer in "Sol-gel Science", Academic Press Inc.1990. In order to facilitate the dissolution and avoid big agglomeration some glicerine and/or some polymeric additives such as polyethyloxazoline are added in a percentage from 0.05 to 1%. The gelation process is carried out by lowering again the pH by means of methyl formate. A sufficient amount of ester must be added in order to neutralize the silica in order to induce the gelation at an acceptable rate.

In the patent US 6,209,357 it is described how to fabricate a silica body, of at least 1Kg and crack-free by adjusting the pH of the silica-containing sol and by adding some gelling agent selected from formamide, N-(-2-hydroxyethyl)-trichloroacetamide, N-(2hydroxyethyl)trifluoronitrile, methyl acetate and propyl carbonate among the others. In accordance with the US 6,209,357 it is possible to fabricate a silica body, of at least 1 kg, by an improved sol-gel process. The sol-gel body is formed by providing a silica dispersion having at least 500 ppm of dissolved silica, inducing gelation of the dispersion at a pH of about 10.5 or greater, and drying the dispersion, such that the body exhibits a rapid increase in ultimate strength upon drying, e.g., a 50-fold increase over wet gel strength at 10 wt. % water loss.

Another interesting perspective on how to tailor the formulation in order to have a better control on the preparation of crack free monolith is the one described by Wang et al. in the US 5,264,197, where it is proposed a method to obtain a specially-tailored gel microstructure, the said microstructure is provided by adjusting the relative concentrations of an alcohol diluent (e.g., ethanol) and/or one or more catalysts (e.g., HCl and HF).

The Toshiba's Japanese patent JP - 2005255495A describes a method for manufacturing silica glass by which bubble-free silica glass is easily manufactured at high yield by mixing silica sol with silica having 1-10 micron particle diameter, the claimed silica sol / silica powder ratio is 1.2 - 2.3. The obtained glasses do not have an acceptable transparency because of the big particle size.

The Yazaki patent WO 01/53225 describes a process for producing synthetic silica glass combining an aqueous suspension with silicon alkoxide solution called sol which has particles bigger than 10micron and the loading of silica is between 34% and 40%.

The Yazaki patent WO 02/074704 describes methods for making silica glasses by sol-gel techniques. The process requires to prepare a suspension made of acid, water and silica having a pH of less than 2.2, this this suspension is then mixed with an alkoxysilane to form a liquid which is successively titrated with a base in order to have a liquid with pH in the range 2.8 to 3.6. Those skilled in the art can easily see that the method has some constraint in terms of use because of, for instance, the very narrow range of pH.

The authors are convinced that the drying procedure is an important parameter when it comes to big samples cracks-free. Some authors describes a multisteps process that goes through the water extraction from the hydrogel by means of organic liquid particularly miscible with water, generally selected from the group of C1-C4 alcohols and C3-C5 ketones. After that water replacement with organic liquid these are removed by drying at a temperature in the range 80 to 110°C and high pressure as described in the patent US 6,897,181.

In the WO 2006/094869 the authors report the drying in autoclave in almost supercritical conditions by means of acetone and nitrogen.

Rigacci and al. (J. Non Cryst. Solids 12:18-35) reported the drying of gels in supercritical CO₂. The gels are first aged for 7 days at 60°C, their solvents is afterwards exchanged for acetone and then for supercritical CO₂, followed by a slow isothermal depressurization.

According to the invention the drying in controlled conditions is proposed as tool to obtain a material that can be further densified in the oven obtaining high yield in unbroken glass and high purity even if the oven does not have systems that guarantees high standard of cleanness. This is most likely due to the fact that the xerogels obtained by drying the gels in controlled conditions lead to material with pores and reactivity reduced versus the conventional materials used for obtaining high purity in big size objects.

The high yield is reached by using a formulation that develops a defined content of alcohol which leads to less capillary forces which are the main causes of brekages and cracks in silica glass obtained by sol-gel technology. In particular when it comes to big objects.

In fact, ethanol has capillary pressure much lower than water: γ alcohol = 0.0022N/m γ water = 0.0073N/m.

The subject of the invention is a method for the production of glassy monoliths via the sol-gel process, which is characterized by the following steps:
- adding fine particle pyrogenically produced silica to water at acidic, pH-value in order to produce a dispersion, whereby the acidic pH-value can be made by the addition of a hydrogenchlorid solution in water,
- adding silicon tetraalkoxide to the dispersion of the silica, whereby the tetraalkoxide of the silicon can be TEOS (Tetraethoxysilane) and TMS (Tetramethoxysilane)
- adjusting the pH-value of the dispersion
- placing the resulting sol solution into a container
- gelling the sol to a wet gel
- drying the wet gel to a Xerogel
- sintering the dried gel to yield a glass article.

According to the invention the method for the production of glassy monoliths via the sol-gel process, is **characterized in that**
a) to an aqueous solution of an acid pyrogenically produced silica is added in order to form a dispersion
b) then to this dispersion tetraethylorthosilicate (TEOS) is added, whereby the ratio of silica to TEOS is 2,6 to 5
c) then the pH-value is adjusted to a value of 4,5 ± 0,5
d) then the resulting sol is poured into a mould and closed at the top with water in order to gel the sol
e) then the resulting gel is dried at a temperature of lower than 70°C and at a relative humidity of higher than 50 % to a Xerogel and
f) then the resulting Xerogel is sintered at a temperature above 1200°C.

In a way of the invention the solvent is not be evaporated.

The tailoring of the sol composition can be done for a process that can be described as follows:
A) Dispersing a pyrogenically prepared silicon dioxide in water or a water containing solvent, to form an aqueous or water containing dispersion;
B) Addition of an acid in order to reach a pH-value of 2 ± 0.5;
C) Addition of tetraethylorthosilicate (TEOS);
D) Titration of the sol by means of ammoniumhydroxide till pH 4.5 ± 0.5;
E) Sol so obtained is poured into molds where the gelation takes place;
F) Drying of the gel in a climate chamber at a T lower than 70°C and relative humidity higher than 50% for a time that depends on the ratio surface area and volume (A/V), the bigger is this value shorter the drying time. The drying can be carried out at atmospheric pressure;
G) Sintering in the oven.
The operation according to step G) can be done in a furnace, where the temperature can be raised in a first step slowly up to 900°C under an atmosphere containing O₂ (calcination phase).
After this treatment, or during the same, the furnace can be fed with chlorine and/or chlorine generators, which operation is aimed to purify and remove the hydroxyl group from the treated material. This treatment can be carried out at a temperature between 1000 and 1250°C. After this phase the temperature can be raised up to 1600°C in order to reach the vitrification phase. The said vitrification can be carried out under inert atmosphere.
The duration of the treatment can range from tens of minutes to many hours.
The operation according to the steps A) to D) can be carried out in one single batch so avoiding the solution transferring from vessel to vessel. In fact there is not a need to prepare a premix of SiO₂ in a separate container.
The preparation of the dispersion in step A) can be carried out by a known route by introducing the pyrogenically prepared silicon dioxide powder into the dispersing medium, such as, for example, water, and treating the mixture mechanically with a suitable device.
Suitable devices can be: Ultra-Turrax, wet-jet mill, nanomizer etc.
The solids content of the dispersion/paste can be 5 to 80 wt.-%.
The pyrogenically prepared silicon dioxide can be added to the hydrolysate in the form of granules. In particular, granules based on silicon dioxide according to DE 196 01 415 A1 can be used. These granules have the characteristic data:

| | |
|---|---|
| Average particle diameter: | 25 to 120 µm |
| BET surface area: | 40 to 400 m²/g |
| Pore volume: | 0.5 to 2.5 ml/g |
| Pore distribution: | pores < 5 nm |
| pH: | 3.6 to 8.5 |
| Tamped density: | 220 to 700 g/l. |

As a result, the shrinkage factor is lower, and larger glass components can be produced with the same equipment.
The shrinkage factor during the production of the glass can be adjusted by the content of pyrogenically prepared silicon dioxide in the sol to be prepared according to the invention. According to the invention, a shrinkage factor of 0.45 to 0.55 can be achieved.
The pyrogenically prepared silicon dioxide which can be employed according to the invention is advantageously suitable for the production of special glasses having outstanding optical properties. The glasses produced by means of the silicon dioxide according to the invention have a particularly low adsorption in the low UV range.
A pyrogenically prepared silicon dioxide powder known from WO 2004/054929 having:
BET surface area of 30 to 90 m²/g,
DBP number of 80 or less,
an average aggregate area of less than 25,000 nm²,
an average aggregate circumference of less than 1,000 nm,
at least 70 % of the aggregates having a circumference of
   less than 1,300 nm,
   can furthermore be used according to the invention as the pyrogenically prepared oxide of a metal and/or a metalloid.

In a preferred embodiment, the BET surface area can be between 35 and 75 m²/g. Values between 40 and 60 m²/g can be particularly preferred. The BET surface area is determined in accordance with DIN 66131.

In a preferred embodiment, the DBP number can be between 60 and 80. In the DBP absorption, the power uptake, or the torque (in Nm), of the rotating paddles of the DBP measuring apparatus on addition of defined amounts of DBP is measured, in a manner comparable to a titration. For the silicon dioxide which can be employed according to the invention, a sharply pronounced maximum with a subsequent drop at a particular addition of DBP results here.

The silicon dioxide powder which can be employed according to the invention can furthermore have a viscosity of less than 100 mPas, based on a 30 wt.% aqueous dispersion at a shear rate of 5 revolutions/minute. In particularly preferred embodiments, the viscosity can be less than 50 mPas.

The pH of the silicon dioxide powder which can be employed according to the invention, measured in a 4 per cent aqueous dispersion, can be between 3.8 and 5.

The silicon dioxide powder which can be employed according to the invention can be employed in the form of an aqueous dispersion.

The aqueous dispersion which can be employed according to the invention can have a content of silicon dioxide powder of between 5 and 80 wt.-%. Dispersions having a content of silicon dioxide powder of between 20 and 40 can be particularly preferred. These dispersions have a high stability with a comparatively low structure. A dispersion of approx. 30 wt.-% can be very particularly preferred.

In a preferred embodiment, an aqueous dispersion which can be employed according to the invention with 30 wt.-% of silicon dioxide powder can have a viscosity which is less than 150 mPas at a shear rate of 50 rpm. The range below 80 mPas can be particularly preferred.

The aqueous dispersion which can be employed according to the invention can preferably have an average particle size of the aggregates of the silicon dioxide powder which is less than 200 nm. For particular uses, a value of less than 150 nm can be particularly preferred.

The dispersion which can be employed according to the invention can be stabilized by the addition of bases or cationic polymers or aluminium salts or a mixture of cationic polymers and aluminium salts or acids.

Bases which can be employed are ammonia, ammonium hydroxide, tetramethylammonium hydroxide, primary, secondary or tertiary organic amines.

The inventors have now surprisingly found that a silica/TEOS molar ratio bigger than 2.45 the changes to obtain big objects are significatly improved. Elsewhere, it as been also observed that scattering and transmittance at 190 nm are better when the ratio is higher than 2.58.

Moreover the fact that the ethanol is not removed by evaporation as described by many patents that use a similar approach allow the drying as xerogel also for big objects because the high content of ethanol in the formulation and its low γ.

In terms of efficiency of the process, extensive tests have been carried out in order to evaluate the yield during the drying. In table 1 are reported the results obtained by changing the ratio SiO₂/TEOS for objects with different A/V.

A/V means the ratio of the surface area to the volume.

**Table 1 * 1/3 of the ethanol has been evaporated**

| **SiO₂/ TEOS** | **A/V** | **Drying time (days at 40°C and 80% HR)** | **Shrinkage % (initial dimension/final dimension after drying)** |
|---|---|---|---|
| 3,48* | 0,067 | 7 | Broken |
| 3,48* | 0,81 | 3 | 28 |
| 3,48 | 0,067 | 6 | 28 |
| 3,48 | 0,81 | 3 | 27,8 |
| 3,85 | 0,067 | 5 | 27,6 |
| 3,85 | 0,81 | 2 | 27,6 |
| 4,95 | 0,067 | 4 | 27,2 |
| 4,95 | 0,81 | 2 | 27,1 |

From the results shown in table 1 one can infer that, as expected, the drying time depends on the dimensions and shape of the sample and also most important, the ratio SiO₂/TEOS plays a big part in the definition of the time needed for the drying and also on the yield.

Without wishing to be bound to theory it is proposed that the reasons for the good results in terms of yield of the drying process is thought to be lying on the fact that the higher concentration of ethanol reduces the stress induced into the sol during the drying. In particular when the liquids is draining into the pores and the meniscus retreats as well the stress is reduced by the presence of the organic moieties that lower the surface tension (height of the meniscus).

One advantage of the invention is that those dried gel are much more stable versus contamination during the sintering process. To prove this fact it has been put in an oven a sheet of silicate containing high concentration of minerals similar to those that can be found in ores (meaning containing high concentration of salts such as iron silicates, manganese phosphates, zirconium oxide among the others). Those contaminants are known to be migrant species when put at higher temperature like an oven.

In the same oven were put an aerogel obtained by supercritical drying (a), a xerogel obtained out of a formulation characterized by a ration SiO2/TEOS equal to 2,2 (b) and a xerogel obtained out of a formulation characterized by a ration SiO2/TEOS equal to 3.46 (c).

It has been observed that only the sample (c) turned in transparent quartz while the samples (a) and (b) where both characterized by a high content of inclusions and crystals formation.

Without wishing to be bound to theory it is thought that the xerogel (c) obtained as described has the pores almost closed and that prevents the formation of crystobalite and the inclusion of metallic contaminants.

### Example 1 (comparative example)

To 12.5 l of HCl 0,01 N are added under strong agitation using an Ultra-Turrax mixer 5.28 kg of colloidal silica powder (Aerosil EG 50 by Evonik Degussa GmbH). This dispersion is transferred to a reactor where under vigorous stirring are added 7,121 l of tetraethylorthosilicate (TEOS). The molar ratio Silica / TEOS is 2.58.

After about 60 minutes to this dispersion a solution of ammonium hydroxide 0,1 N is added dropwise under stirring, until a pH of about 4.85 is reached.

This colloidal solution is poured into a mold with A/V of 0,067 and then closed.

After about 12 hours the washing in water starts. After several washes the gel, which is obtained, is washed with a mixture of about acetone 10 wt.-% in water. Subsequently the acetone concentration in the following mixtures used to wash is gradually raised until anhydrous acetone is used for the final washings.

The samples are then dried in an autoclave at a temperature of 250 °C and 59 bar. The autoclave is then pressurized with nitrogen at room temperature up to the pressure of 50 bar. The heating of the autoclave is started, until the temperature of 250 °C is reached. With increasing temperature values, the pressure inside the autoclave increase up to 60 bar, and such a pressure value is kept constant by acting on the vent valves. With the temperature being still kept constant at 250 °C, by acting on the vent valve, the pressure inside the autoclave is then caused to decrease down to room pressure, at the speed of 4 bar/hour. The solvent contained inside the autoclave is thus removed. The last traces of such a solvent are removed by washing the autoclave with a slow stream of nitrogen for about 15 minutes and/or using vacuum. The sample has been densified in the oven with the ores at 1400°C and the samples obtained afterwards was with inclusions and partially crystobalized.

### Example 2 (according to the invention)

To 21 l of HCl 0,01 N are added under strong agitation using an Ultra-Turrax mixer 9.0 kg of pyrogenically produced silica (Aerosil EG 50 by Evonik Degussa GmbH). This dispersion is transferred to a reactor where under vigorous stirring are added 8.092 l of tetraethylorthosilicate (TEOS). The molar ratio Silica / TEOS is 3.85.

After about 60 minutes to this dispersion a solution of ammonium hydroxide 0,1 N is added dropwise under stirring, until a pH of about 5 is reached.

This colloidal solution is poured into a mold with A/V 0.067 then closed with some water on the top of silica gel.

After about 12 hours the lid is removed and sample is put in a climate chamber set at 40°C and 80% relative humidity. After 7 days the sample was taken out of the chamber and put in a sintering oven with ores and densified at 1400°C. The sample obtainged afterwards was without inclusion and with a transmittance at 240 nm of 95%.

It should be understood that the descriptions of the embodiments and the formulations are illustrative of the invention and are not intended to be limiting, Various modifications and applications may occur to those skilled in the art without departing from the scope of the invention as defined in the claims.

## Claims

1. Method for the production of glassy monoliths via the sol-gel process **characterized by** the following steps:
a) to an aqueous solution of an acid pyrogenically produced silica is added in order to form a dispersion
b) then to this dispersion tetraethylorthosilicate (TEOS) is added, whereby the molar ratio of silica to TEOS is 2.6 to 5
c) then the pH-value is adjusted to a value of 4,5 ± 0,5
d) then the resulting sol is poured into a mould and closed at the top with water in order to gel the sol
e) then the resulting gel is dried at a temperature of lower than 70°C and at a relative humidity of higher than 50 % to a xerogel and
f) then the resulting xerogel is sintered at a temperature above 1200°C.

2. Method according to claim 1, where the drying is carried out at atmospheric pressure.

## Patentansprüche

1. Verfahren zur Herstellung von glasartigen Monolithen mittels dem Sol-Gel-Prozess, welches durch die folgenden Schritte gekennzeichnet ist:
a) zu einer wässrigen Lösung einer Säure wird pyrogen hergestelltes Siliciumdioxid zugegeben, um eine Dispersion zu bilden
b) dann wird zu dieser Dispersion Tetraethylorthosilicat (TEOS) zugegeben, wobei das molare Verhältnis zu Siliciumdioxid zu TEOS 2,6 bis 5 ist
c) dann wird der pH-Wert auf einen Wert von 4,5 +/- 0,5 angepasst
d) dann wird die resultierende Sole in eine Form gegossen und oben mit Wasser verschlossen, um die Sole zu vergelen
e) dann wird das resultierende Gel bei einer Temperatur von weniger als 70°C und einer relativen Feuchtigkeit von größer als 50% zu einem Xerogel getrocknet und
f) dann wird das resultierende Xerogel bei einer Temperatur über 1200°C gesintert.

2. Verfahren nach Anspruch 1, wobei das Trocknen bei Atmosphärendruck ausgeführt wird.

## Revendications

1. Procédé pour la production de monolithes vitreux par le procédé sol-gel, **caractérisé par** les étapes suivantes:
a) à une solution aqueuse d'un acide produit par voie pyrogénique est ajoutée de la silice, pour former une dispersion
b) puis, à cette dispersion est ajouté du tétraéthylorthosilicate (TEOS), le rapport molaire entre la silice et le TEOS étant de 2,6 à 5
c) ensuite, la valeur du pH est ajustée à une valeur de 4,5 ± 0,5
d) ensuite, le sol résultant est versé dans un moule et fermé dans le haut avec de l'eau, pour gélifier le sol
e) puis, le gel résultant est séché à une température inférieure à 70°C et à une humidité relative supérieure à 50%, pour obtenir un xérogel, et
f) ensuite, le xérogel résultant est fritté à une température supérieure à 1200°C.

2. Procédé selon la revendication 1, dans lequel le séchage est effectué à pression atmosphérique.
